# EUROPÄISCHE PATENTSCHRIFT

(11) **EP 3 649 449 B1**
(45) Veröffentlichungstag und Bekanntmachung des Hinweises auf die Patenterteilung: **19.02.2025**
(21) Anmeldenummer: 18732753.1
(22) Anmeldetag: 19.06.2018
(51) Int. Cl.: G01L 19/00, C23F 13/10, C23F 13/02, C23F 13/14, C23F 13/16, G01L 9/14

(54) **KORROSIONSSCHUTZ-ELEMENT FÜR EIN FELDGERÄT**
ANTICORROSION ELEMENT FOR FIELD DEVICE
ÉLÉMENT ANTICORROSION POUR CAPTEURS

(30) Priorität: 07.07.2017 DE 102017115250
(43) Veröffentlichungstag der Anmeldung: 13.05.2020
(73) Patentinhaber: Endress+Hauser SE+Co. KG, 79689 Maulburg (DE)
(72) Erfinder: LOPATIN, Sergej, 79540 Lörrach (DE); UEHLIN, Thomas, 79650 Schopfheim (DE); HÜGEL, Michael, 79541 Lörrach (DE)
(74) Vertreter: Laufer, Michael
(86) Internationale Anmeldenummer: PCT/EP2018/066270
(87) Internationale Veröffentlichungsnummer: WO 2019/007677

(56) Entgegenhaltungen:
- CN-U- 202 898 547
- DE-A1- 10 347 861
- DE-A1- 2 548 377
- US-A- 3 994 794
- US-A1- 2010 252 424
- ROSEMOUNT: "Material Selection and Compatibility Considerations for Rosemount Pressure Transmitters", 30 September 2015 (2015-09-30), XP055506286, Retrieved from the Internet <URL:https://www.emerson.com/documents/automation/technical-note-material-selection-considerations-for-pressure-transmitters-en-77770.pdf> [retrieved on 20180911]
- ANONYMOUS: "Cathodic protection - Wikipedia", 25 June 2017 (2017-06-25), XP055506130, Retrieved from the Internet <URL:https://en.wikipedia.org/w/index.php?title=Cathodic_protection&oldid=787520353> [retrieved on 20180911]

## Beschreibung

Die Erfindung betrifft ein Korrosionsschutz für ein Feldgerät, das mindestens eine mit einer Umgebung des Feldgeräts in Kontakt stehende Komponente aus Edelstahl, insb. aus austenitischem Edelstahl, umfasst, sowie ein mit mindestens einem solchen Korrosionsschutz-Element ausgestattetes Feldgerät.

Feldgeräte werden in der industriellen Messtechnik, insb. in der Prozess- und Automatisierungstechnik, unter anderem zur messtechnischen Erfassung von prozessrelevanten Messgrößen eingesetzt. Zu diesen Feldgeräten zählen unter anderem Sensoren, Transmitter, Messaufnehmer, sowie Messgeräte unterschiedlichster Art, wie sie z.B. zur messtechnischen Erfassung, Messung und/oder Überwachung von Messgrößen eingesetzt werden.

Feldgeräte umfassen unter anderem Differenzdruck-Messaufnehmer, wie sie z.B. in der DE 103 47 861 A1 beschrieben sind. Diese Messaufnehmer umfassen ein Messwerk, das zwischen zwei auf einander gegenüberliegenden Außenseiten eines Messwerkskörpers des Messwerks angeordneten Flanschen eingespannt ist. Hierzu sind die Flansche durch Schrauben miteinander verbunden, die jeweils einen zwischen den Flanschen frei liegenden, mit der Umgebung des Messaufnehmers in Kontakt stehenden Bereich aufweisen. Zusätzlich umfassen diese Messaufnehmer einen Differenzdrucksensor, der über zwei dem Sensor vorgeschaltete Druckmittler mit jeweils einem der beiden Drücke, deren Differenz gemessen werden soll, beaufschlagbar ist. Die Druckmittler sind nach außen jeweils durch eine auf eine Außenseite des Messwerkkörpers aufgeschweißte Trennmembran abgeschlossen. Die Druckbeaufschlagung der Trennmembranen erfolgt jeweils über einen an eine Wirkdruckleitung anschließbaren Druckübertragungskanal, der durch den jeweiligen Flansch hindurch bis zu einer unter dem Flansch eingeschlossenen, an die jeweilige Trennmembran angrenzenden Druckkammer führt.

Genau wie eine Vielzahl anderer Feldgeräte auch, können Differenzdruck-Messaufnehmer im Betrieb vergleichsweise hohen mechanischen Belastungen ausgesetzt sein. So sind Druckmittler genauso wie Druck- oder Differenzdruck-Messaufnehmer ggfs. sehr hohen zu übertragenen bzw. zu messenden Drücken ausgesetzt. Differenzdruck-Messaufnehmer müssen darüber hinaus je nach Anwendung ggfs. sehr hohen statischen Drücken standhalten, denen der zu messende Differenzdruck überlagert ist. Des Weiteren sollten sie nach Möglichkeit einseitigen Drucküberlasten, wie z.B. Überlasten von bis zu 200 bar oder sogar bis zu 650 bar, standhalten.

Eine hohe mechanische Beständigkeit von Feldgeräten wird heute üblicher Weise dadurch erzielt, dass zumindest deren mechanisch stark beanspruchten Bauteile, wie z.B.

Gehäuse, Prozessanschlüsse, Befestigungsmittel, Messwerkskörper etc. aus druckfesten, mechanisch stabilen Metallen hergestellt werden. Hierzu eignen sich insb. Edelstähle. Dabei bieten austenitische Edelstähle den zusätzlichen Vorteil einer gewissen Duktilität, die die daraus gefertigten Bauteile insb. auch bei plötzlich auftretenden Überbelastungen vor Spannungsrissen schützt. Austenitische Edelstähle werden heute unter anderem auch zur Herstellung von Trennmembranen von Druckmittlern eingesetzt.

Es gibt Anwendungen, in denen Feldgeräte einer korrosiven Umgebung ausgesetzt sind, durch die damit in Kontakt gelangende Bauteile aus Edelstahl durch Korrosion angegriffen werden. Hierzu zählen unter anderem feuchte, salzhaltige Umgebungen, wie sie z.B. in Off-Shore Anlagen oder in unter Verwendung von Meerwasser oder anderen salz- und/oder chlorid-haltigen Flüssigkeiten insb. bei höheren Temperaturen betriebenen Anlagen vorliegen. Durch diese Umgebungen werden z.B. Bauteile aus austenitischem Edelstahl durch Korrosion angegriffen. Korrosive Umgebungen verursachen Lochfraßkorrosion. Darüber hinaus führen sie bei Feldgeräten, die enge, mit der korrosiven Umgebung in Kontakt gelangende Spalte aufweisen, zu Spaltkorrosion und greifen Schweißnähte an. So können bei den zuvor erwähnten Differenzdruck-Messaufnehmern z.B. die mit der Umgebung in Kontakt stehenden Flansche und das mit der Umgebung in Kontakt stehende Messwerk z.B. durch Lochfraßkorrosion angegriffen werden. Darüber hinaus kann von außen einsetzende Spaltkorrosion dazu führen, dass die korrosive Umgebung von außen zwischen einem der Flansche und dem Messwerk eindringt und ggfs. sogar bis zur jeweiligen Druckkammer gelangt, wo sie in Kontakt zu der Trennmembran und der die Trennmembran mit dem Messwerk verbindenden Schweißnaht gelangt. Letzteres kann mit der Zeit dazu führen, dass die Druckkammern und/oder die Druckmittler undicht werden, was je nach Einsatzort erhebliche Folgeschäden nach sich ziehen kann.

Wie das Beispiel zeigt, kann Korrosion von Bauteilen aus Edelstahl erhebliche Schäden am Feldgerät verursachen und unter Umständen sogar zum Totalausfall des Feldgeräts führen. Entsprechend sollten Feldgeräte, die Bauteile aus Edelstahl umfassen, nicht in korrosiven Umgebungen eingesetzt werden, die den verwendeten Edelstahl durch Korrosion angreifen.

Um eine höhere Korrosionsbeständigkeit zu erzielen, können korrosiven Umgebungen ausgesetzte Bauteile von Feldgeräten aus korrosionsbeständigeren Duplex- oder Super-Duplex Stählen gefertigt werden. Diese Werkstoffe sind jedoch teurer als austenitische Edelstahlsorten und mechanisch deutlich schwerer zu bearbeiten. Letzteres führt insb. bei der Fertigung von durch Drehen zu bearbeitenden Komponenten zu vergleichsweise hohen Produktionskosten.

Es ist eine Aufgabe der Erfindung einen zuverlässigen, auf einfache Weise einsetzbaren, kostengünstigen Korrosionsschutz für Feldgeräte anzugeben. Das Stand-der-Technik-Dokument DE 25 48 377 A1 befasst sich mit einem Korrosionsschutz-Element mit Klemmstelle. Das Feldgerät muss jedoch von einem seiner Enden her längs eingeschoben werden.

Hierzu umfasst die Erfindung ein Korrosionsschutz-Element gemäß Anspruch 1.

Erfindungsgemäße Korrosionsschutz-Elemente bieten den Vorteil, dass durch Eisen und/oder rostenden Stahl umfassende Opferanoden ein hochwertiger kathodischer Korrosionsschutz von Komponenten aus Edelstahl, insb. aus austenitischem Edelstahl, erzielt werden kann. Darüber hinaus bieten sie den Vorteil, dass durch sie nicht nur die Komponente geschützt ist, an der sie angebracht werden, sondern zugleich auch ein kathodischer Korrosionsschutz für alle weiteren Bauteile des Feldgeräts gegeben ist, die aus Edelstahl oder einem anderen im Vergleich zu Eisen oder rostendem Stahl edleren Metall bestehen und in elektrisch leitendem Kontakt zu dem Korrosionsschutz-Element und/oder der mit dem Korrosionsschutz-Element ausgestatteten Komponente stehen. Damit können auch Bauteile, geschützt werden an denen z.B. aus Platzgründen kein Korrosionsschutz-Element angebracht werden kann. Hierzu zählen insb. auch Bauteile, die an im Feldgerät vorhandene enge Spalte angrenzen, die am Einsatzort des Feldgeräts in Kontakt mit der korrosiven Umgebung gelangen können.

Darüber hinaus sind Eisen und rostender Stahl kostengünstige, leicht zu bearbeitende Werkstoffe, aus denen Körper mit innerhalb sehr weiter Grenzen frei wählbarer Formgebung herstellbar sind. Das bietet den Vorteil, dass die Formgebung erfindungsgemäßer Korrosionsschutz-Elemente problemlos an die Formgebung von im Feldgerät vorhandenen Komponenten angepasst werden kann. Damit können auch bereits bestehende oder sogar bereits im Einsatz befindliche Feldgeräte nachträglich mit erfindungsgemäßen Korrosionsschutz-Elementen ausgestattet werden und/oder verbrauchte Korrosionsschutz-Elemente nach deren Einsatz auf einer Komponente eines Feldgeräts ausgetauscht werden.

Eine erste Weiterbildung zeichnet sich dadurch aus, dass das Korrosionsschutz-Element als auf die Komponente aufschiebbares, aufsteckbares oder aufklemmbares Element ausgebildet ist.

Eine zweite Weiterbildung zeichnet sich dadurch aus, dass das Korrosionsschutz-Element einen Körper, insb. einen einteiligen Körper, aus Eisen oder einem rostendem Stahl umfasst.

Eine dritte Weiterbildung zeichnet sich dadurch aus, dass der Körper mit einer Beschichtung aus einem zum kathodischen Korrosionsschutz von Edelstahl geeigneten Beschichtungsmaterial beschichtet ist.

Eine Weiterbildung der dritten Weiterbildung zeichnet sich dadurch aus, dass das Beschichtungsmaterial Zink umfasst.

Weiterbildungen der dritten Weiterbildung oder deren Weiterbildung zeichnen sich dadurch aus, dass
- der Körper eine Materialstärke in der Größenordnung von 0,2 mm bis 3 mm, insb. von 0,3 mm bis 1 mm, aufweist, und/oder
- die Beschichtung eine Schichtdicke in der Größenordnung von 20 µm bis 50 µm aufweist.

Eine vierte Weiterbildung zeichnet sich dadurch aus, dass das Korrosionsschutz-Element eine auf die Komponente aufschiebbare Hülse umfasst, wobei das Korrosionsschutz-Element insb. als einteiliges, hülsenförmiges auf die Komponente aufschiebbares Element ausgebildet ist.

Eine fünfte Weiterbildung zeichnet sich dadurch aus, dass das Korrosionsschutz-Element eine auf die Komponente aufsteckbare oder aufklemmbare Federklemme umfasst, wobei das Korrosionsschutz-Element insb. als einteiliges, auf die Komponente aufsteckbares oder aufklemmbares, federklemmenförmiges Korrosionsschutz-Element (3) ausgebildet ist.

Des Weiteren umfasst die Erfindung ein mit mindestens einem erfindungsgemäßen Korrosionsschutz-Element ausgestattetes Feldgerät, das sich dadurch auszeichnet, dass jedes vorgesehene Korrosionsschutz-Element jeweils auf einer mit einer Umgebung des Feldgeräts in Kontakt stehenden Komponente des Feldgeräts aus Edelstahl, insb. aus austenitischem Edelstahl, angebracht ist.

Eine erste Weiterbildung des Feldgeräts zeichnet sich dadurch aus, dass das die vorgesehenen Korrosionsschutz-Elemente
- mindestens ein auf eine längliche Komponente aufgeschobenes eine Hülse umfassendes oder als hülsenförmiges Korrosionsschutz-Element ausgebildetes Korrosionsschutz-Element umfassen, das zumindest einen Bereich dieser Komponente außenseitlich umgibt, und/oder
- mindestens ein auf eine von außen zugängliche Komponente aufgestecktes oder aufgeklemmtes Korrosionsschutz-Element umfassen, das eine Federklemme umfasst
oder als einteiliges federklemmenförmiges Korrosionsschutz-Element ausgebildet ist, dessen beiden Federschenkel zumindest einen Bereich dieser Komponente umgreifen.

Eine Weiterbildung der letztgenannten Weiterbildung zeichnet sich dadurch aus, dass zu beiden Seiten des Bereichs mindestens einer der Komponenten jeweils eine Begrenzung vorgesehen ist, die derart ausgebildet ist, dass sie eine axiale Bewegung des auf dem Bereich angebrachten Korrosionsschutz-Elements in parallel zur Längsachse des Bereichs verlaufender Richtung begrenzt.

Eine zweite Weiterbildung des Feldgeräts zeichnet sich dadurch aus, dass mindestens eine der vorgesehenen Komponenten einen verjüngten Bereich aufweist, auf dem ein eine Federklemme umfassendes oder als einteiliges, federklemmenförmiges Korrosionsschutz-Element ausgebildetes Korrosionsschutz-Element derart aufgesteckt oder aufgeklemmt ist, dass es den verjüngten Bereich außenseitlich umgreift.

Eine dritte Weiterbildung des Feldgeräts zeichnet sich dadurch aus, dass das Feldgerät mindestens ein weiteres durch mindestens eines der vorgesehenen Korrosionsschutz-Elemente vor Korrosion geschütztes Bauteil aus Edelstahl, insb. aus austenitischem Edelstahl, oder einem im Vergleich zu Eisen oder rostendem Stahl edleren Metall umfasst, das in elektrisch leitendem Kontakt zu mindestens einer der mit einem der Korrosionsschutz-Elemente ausgestatteten Komponenten und/oder dem auf der jeweiligen Komponente montierten Korrosionsschutz-Element steht.

Eine vierte Weiterbildung des Feldgeräts zeichnet sich dadurch aus, dass das
- das Feldgerät einen Differenzdruckmessaufnehmer umfasst,
- der Differenzdruckmessaufnehmer ein zwischen zwei durch Schrauben miteinander verbundenen Flanschen eingespanntes Messwerk umfasst,
- die Schrauben jeweils einen zwischen den Flanschen frei liegenden, mit der Umgebung in Kontakt stehenden Bereich umfassen, und
- auf dem mit der Umgebung in Kontakt stehenden Bereich mindestens einer der Schrauben jeweils eines der vorgesehenen Korrosionsschutz-Elemente angebracht ist.

Eine fünfte Weiterbildung des Feldgeräts zur messtechnischen Erfassung, zur Messung und/oder zur Überwachung einer Messgröße eines in einem Behälter befindlichen Füllguts, zeichnet sich dadurch aus, dass
- das Feldgerät einen innerhalb des Behälters anzuordnen Teil und einen außerhalb des Behälters anzuordnen Teil umfasst,
- mindestens einer der beiden Teile eine Komponente, insb. ein Gehäuse, umfasst, auf der ein Korrosionsschutz-Element angebracht ist, wobei das Korrosionsschutz-Element insb. ein auf einen verjüngten Gehäuseabschnitt des jeweiligen Gehäuses aufgestecktes oder aufgeklemmtes Korrosionsschutz-Element ist.

Die Erfindung und weitere Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen.
- Fig. 1 zeigt:: ein als Hülse ausgebildetes Korrosionsschutz-Elements;
- Fig. 2 zeigt:: eine Ansicht eines als Federklemme ausgebildeten Korrosionsschutz-Elements;
- Fig. 3 zeigt:: das Korrosionsschutz-Element von Fig. 2 im Schnitt;
- Fig. 4 zeigt:: eine Ansicht eines Differenzdruck-Messaufnehmers;
- Fig. 5 zeigt:: einen Differenzdruck-Messaufnehmer im Schnitt;
- Fig. 6 zeigt:: einen Flansch und die Schrauben eines Differenzdruck-Messaufnehmers zusammen mit auf die Schrauben aufgeschobenen hülsenförmigen Korrosionsschutz-Elementen;
- Fig. 7 zeigt:: eine Ansicht eines Differenzdruck-Messaufnehmers zusammen mit auf dessen Schrauben aufsteckten oder aufgeklemmten federklemmenförmigen Korrosionsschutz-Elementen; und
- Fig. 8 zeigt:: einen Füllstandsgrenzschalter.

Die Erfindung umfasst Korrosionsschutz-Elemente für Feldgeräte, die mindestens eine mit einer Umgebung des Feldgeräts in Kontakt stehende Komponente aus Edelstahl umfassen. Erfindungsgemäße Korrosionsschutz-Elemente zeichnen sich dadurch aus, dass sie jeweils als Eisen oder rostenden Stahl umfassende Opferanode ausgebildet sind und eine Formgebung aufweisen, die derart ausgebildet ist, dass das jeweilige Korrosionsschutz-Element derart an der Komponente des Feldgeräts anbringbar ist, dass die Opferanode in elektrisch leitendem Kontakt zu der Komponente steht.

Im Hinblick auf den elektrisch leitenden Kontakt genügt es bereits, wenn sich die Opferanode und die Komponente, an der das Korrosionsschutz-Element angebracht ist, zumindest an einer Stelle berühren.

Eisen und rostender Stahl sind im Hinblick auf die elektrochemische Spannungsreihe unedlere Werkstoffe als Edelstahl. Im Einsatz in einer korrosiven Umgebung bildet das an der Komponente des Feldgeräts angebrachte Korrosionsschutz-Element somit einen Bestandteil eines Primärelements, das die Opferanode als Anode und die aus dem im Vergleich zu Eisen oder rostendem Stahl edleren Edelstahl bestehende Komponente als Kathode umfasst. Durch das Anbringen des Korrosionsschutz-Elements an der Komponente wird somit ein kathodischer Korrosionsschutz der Komponente erzielt, der so lange anhält, bis die Opferanode durch Korrosion verbraucht ist.

Dieser kathodische Korrosionsschutz erstreckt sich zugleich auch auf jedes weitere ggfs. vorhandene mit der korrosiven Umgebung in Kontakt gelangende Bauteil des Feldgeräts, das aus Edelstahl oder einem anderen im Vergleich zu Eisen oder rostendem Stahl edleren Metall besteht und in elektrisch leitendem Kontakt zu der Opferanode und/oder der Komponente steht.

Hierüber wird insb. für Komponenten, sowie ggfs. vorhandene weitere Bauteile des Feldgeräts aus austenitischem Edelstahl, wie z.B. dem unter der Werkstoffbezeichnung 304 bekannten austenitischen Edelstahl oder dem unter der Werkstoffbezeichnung 316L bekannten austenitischen Edelstahl, ein hochwertiger Korrosionsschutz erzielt.

Im Hinblick auf eine möglichst einfache Anbringbarkeit sind die Korrosionsschutz-Elemente vorzugsweise als auf die Komponente des Feldgeräts aufschiebbare, aufsteckbare oder aufklemmbare Elemente ausgebildet.

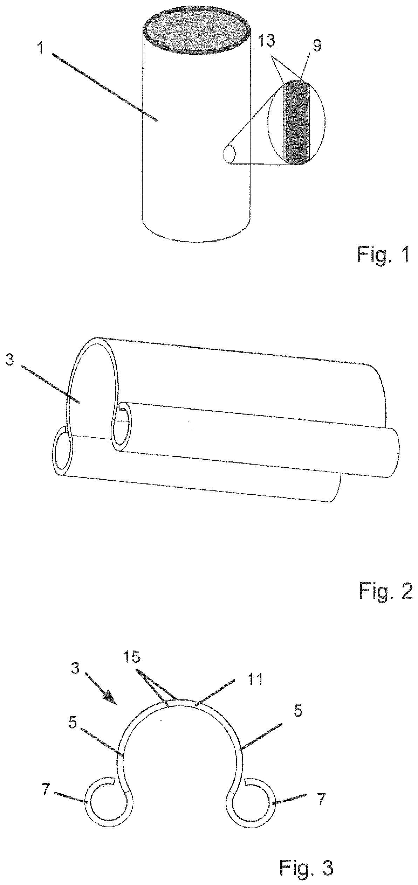

Fig. 1 zeigt hierzu ein Ausführungsbeispiel eines erfindungsgemäßen Korrosionsschutz-Element 1, das eine auf eine Komponente eines Feldgeräts aufschiebbare Hülse umfasst. Diese Korrosionsschutz-Elemente 1 sind vorzugsweise als einteilige, hülsenförmige auf die Komponente aufschiebbare Elemente ausgebildet. Das bietet den Vorteil, dass sie auf kostengünstige Weise aus einem Rohr aus Eisen oder rostendem Stahl gefertigt werden können.

Alternativ können erfindungsgemäße Korrosionsschutz-Elemente eine auf die Komponente aufsteckbare oder aufklemmbare Federklemme umfassen. Diese Ausführungsform bietet den Vorteil, dass die Federklemme auf eine von außen zugängliche Komponente eines Feldgeräts aufgesteckt oder aufgeklemmt werden kann, ohne das mindestens ein Ende der Komponente hierfür frei zugänglich sein muss. Letzteres erleichtert nicht nur die Anbringung und den Austausch des Korrosionsschutz-Elements, sondern auch die Nachrüstung bestehender, ggfs. sogar bereits im Einsatz befindlicher Feldgeräte mit diesen Korrosionsschutz-Elementen 3.

Fig. 2 zeigt eine Ansicht eines Ausführungsbeispiels eines solchen Korrosionsschutz-Elements 3. Fig. 3 zeigt das Korrosionsschutz-Element 3 von Fig. 2 im Schnitt. Wie aus Fig. 3 ersichtlich umfasst die Federklemme zwei Federschenkel 5, die derart geformt sind, dass sie sie sich weit genug öffnen lassen, um das Korrosionsschutz-Elements 3 auf der Komponente aufzustecken oder aufzuklemmen. Eine Federklemme umfassende Korrosionsschutz-Elemente 3 können als von außen auf die bzw. einen Bereich der Komponente aufsteckbarer Klipp ausgebildet sein. In dem Fall umgreifen die Federschenkel 5 den Bereich der Komponente auf die sie aufgesteckt sind. Alternativ können sie als aufklemmbare Feder ausgebildet sein, zwischen deren Federschenkeln die Komponente bzw. ein Bereich der Komponente im aufgeklemmten Zustand eingespannt ist.

Eine Federklemme umfassende Korrosionsschutz-Elemente 3 sind als einteilige, federklemmenförmige Elemente ausgebildet. An die freien Enden der Federschenkel 5 ist jeweils ein nach außen weisender Fortsatz 7 angeformt, der das manuelle Anbringen und Abziehen des Korrosionschutz-Element 3 erleichtert.

Einteilige, federklemmenförmige Korrosionschutz-Elemente 3 bieten den Vorteil, dass sie auf einfache und kostengünstige Weise durch Stanzen und Biegen aus einem Blech aus Eisen oder einem rostenden Stahl erzeugt werden können.

Alternativ können anstelle der in Fig. 1 bis 3 dargestellten, einteiligen Korrosionsschutz-Elemente 1, 3 aber auch mehrteilige Korrosionsschutz-Elemente eingesetzt werden. Ein Beispiel hierfür sind Korrosionsschutz-Elemente, die eine mehrteilige Federklemme umfassen, die mittels einer Spannfeder miteinander verbundene, starre oder federelastische Federschenkel umfasst.

Erfindungsgemäße Korrosionsschutz-Elemente 1, 3 können insgesamt aus Eisen oder rostendem Stahl bestehen. Vorzugsweise umfassen sie jedoch einen die Formgebung des Korrosionsschutz-Elements 1, 3 aufweisenden Körper 9, 11 aus Eisen oder rostendem Stahl, auf den eine Beschichtung 13, 15 aus einem zum kathodischen Korrosionsschutz der Komponente, sowie der ggfs. vorhandenen weiteren Bauteile geeigneten Beschichtungsmaterial.

Diese Variante bietet den Vorteil, dass das Beschichtungsmaterial im Wesentlichen unabhängig von den Anforderungen an die mechanischen Eigenschaften des Korrosionsschutz-Elements 1, 3 bzw. des Körpers 9, 11 ausgewählt werden kann.

Als Beschichtungsmaterial wird hierzu vorzugsweise Zink oder ein Zink enthaltender Werkstoff eingesetzt. Dieses Beschichtungsmaterial kann z.B. galvanisch oder durch Eintauchen des Körpers 9, 11 in eine Zinkschmelze aufgebracht werden.

Die Beschichtungen 13, 15 weisen vorzugsweise eine Schichtdicke in der Größenordnung von 20 µm bis 50 µm auf. Diese vergleichsweise geringe Schichtdicke ermöglicht es auch vergleichsweise spröde Beschichtungsmaterialien, wie z.B. Zink oder Zink enthaltende Werkstoffe einzusetzen. Im Vergleich dazu weist der für die mechanischen Eigenschaften des jeweiligen Korrosionsschutz-Elements 1, 3 maßgebliche Körper 9, 11 vorzugsweise eine Materialstärke in der Größenordnung von 0,2 mm bis 3 mm, insb. von 0,2 mm bis 1 mm, auf. Je nach Bauform und Anwendungsgebiet können aber auch Körper mit einer größeren Materialstärke und/oder Beschichtungen mit einer größeren Schichtdicke eingesetzt werden.

Beim Einsatz beschichteter Korrosionsschutz-Elemente 1, 3 wird zunächst die Beschichtung 13, 15 angegriffen und abkorrodiert. Dabei wird die Komponente auf der das Korrosionsschutz-Element 1, 3 angebracht ist, sowie die ggfs. vorhandenen weiteren Bauteile des Feldgeräts, die im Redox-Prozess zu der Kathode stehen, vor Korrosion geschützt. Sobald die Beschichtung 13, 15 vollständig verbraucht ist, setzt eine weitere anodische Reaktion ein, bei der der Körper 9, 11 oxidiert wird. Dabei entstehen rostartige Oxidationsprodukte. In diesem Stadium sind die Komponente, sowie ggfs. vorhandene weitere Bauteile durch den Körper 9, 11 vor Korrosion geschützt. Dieser Schutz hält so lange an, bis auch der Körper 9, 11 verbraucht bzw. ab- oder durchkorrodiert ist.

Die Beschichtung 13, 15 bietet den Vorteil, dass neuwertige Korrosionsschutz-Elemente 1, 3 anhand der Beschichtung 13, 15 als solche erkennbar sind. Darüber hinaus rosten verzinkte Korrosionsschutz-Elemente 1, 3 während der Lagerung nicht. Das macht neuwertige Korrosionsschutz-Elemente 1, 3 nicht nur optisch ansprechender, sondern erleichtert zugleich auch deren Lagerung.

Beschichtete Korrosionsschutz-Elemente 1, 3 bieten den weiteren Vorteil, dass das Fehlen der durch Korrosion abgetragenen Beschichtung 13, 15, sowie die Bildung der durch Oxidation des Körpers 9, 11 entstehenden, von außen sichtbaren Reaktionsprodukte, wie z.B. rötlicher Rost, Indikatoren bilden, die anzeigen, dass das Korrosionsschutz-Element 1, 3 einer korrosiven Umgebung ausgesetzt gewesen ist.

Der Zustand eines im Einsatz befindlichen des Korrosionsschutz-Elements 1, 3 wird vorzugsweise regelmäßig kontrolliert und das Korrosionsschutz-Elements 1, 3 bei Bedarf ausgetauscht.

Neben den Korrosionsschutz-Elementen 1, 3 umfasst die Erfindung auch Feldgeräte, die mindestens eine mit einem erfindungsgemäßen Korrosionsschutz-Element 1, 3 ausgestatte, mit der Umgebung in Kontakt stehende Komponente aus Edelstahl umfassen. Dabei handelt es sich bei der jeweiligen Komponente vorzugsweise um eine im Feldgerät ohnehin vorhandene Komponente. Hierzu eignen sich insb. Komponenten, die nicht nur mit der Umgebung in Kontakt stehen, sondern zusätzlich auch von außen sichtbar sind. Letzteres bietet den Vorteil, dass der Zustand des darauf angebrachten Korrosionsschutz-Elements 1, 3 jederzeit visuell überprüft werden kann.

Feldgeräte können z.B. mindestens eine längliche Komponente umfassen, die einen länglichen Bereich umfasst, auf den ein eine Hülse umfassendes Korrosionsschutz-Element 1 aufgeschoben ist. In dem Fall umfasst das Feldgerät vorzugsweise zwei zu beiden Enden des länglichen Bereichs angeordnete Begrenzungen, die derart ausgebildet sind, dass sie eine axiale Bewegung des auf den Bereich aufgeschobenen Korrosionsschutz-Elements 1 in parallel zur Längsachse der Komponente verlaufender Richtung begrenzen. Bei dieser Variante wird das Korrosionsschutz-Element 1 angebracht bevor die zweite Begrenzung vorgesehen wird. Vorzugsweise ist zumindest eine der beiden Begrenzungen als demontierbare Begrenzung ausgebildet. Das bietet den Vorteil, dass das Korrosionsschutz-Element 1 bei Bedarf ausgetauscht werden kann, indem die Begrenzung demontiert, das Korrosionsschutz-Element 1 ausgetauscht und die Begrenzung anschließend wieder montiert wird.

Alternativ oder zusätzlich kann das Feldgerät mindestens eine von außen zugängliche Komponente umfassen, die einen Bereich aufweist, auf den ein eine Federklemme umfassendes Korrosionsschutz-Element 3 aufgesteckt oder aufgeklemmt ist. Wird das Korrosionsschutz-Element 3 aufgesteckt, so weist das Feldgerät auch bei dieser Ausführungsform vorzugsweise zwei zu beiden Seiten des Bereichs angeordnete Begrenzungen auf, die eine axiale Bewegung des auf den Bereich aufgesteckten Korrosionsschutz-Elements 3 in parallel zur Längsachse des Bereichs verlaufender Richtung begrenzen. Da hier keine dieser Begrenzungen für einen Austausch des Korrosionsschutz-Elements 3 demontiert werden muss, kann die Begrenzung hier auch durch die Komponente selbst gegeben sein. So kann die Komponente z.B. einen verjüngten Bereich umfassen, auf den das Korrosionsschutz-Element 3 aufgesteckt oder aufgeklemmt wird. Als verjüngter Bereich wird hier ein Bereich bezeichnet, dessen Querschnittsfläche geringer ist, als die Querschnittsflächen der zu beiden Seiten daran angrenzenden, jeweils eine der beiden Begrenzungen bildenden Bereiche.

Wird ein erfindungsgemäßes Korrosionsschutz-Element 1, 3 z.B. bei entsprechender Bemessung der Federkraft der Federklemme durch Aufklemmen auf der Komponente befestigt, oder aber auf andere Weise auf der Komponente fixiert oder gehalten, z.B. durch Schwerkraft gehalten, so kann auf diese Begrenzungen verzichtet werden.

Eine Federklemme umfassende bzw. als Federklemme ausgebildete Korrosionsschutz-Elemente 3 bieten den Vorteil, dass sie von außen angebracht und nachfolgend jederzeit ausgetauscht werden können. Hierzu muss lediglich der Bereich auf dem das Korrosionsschutz-Element 3 angebracht ist bzw. angebracht werden soll von außen zugänglich sein. Das Feldgerät muss hierzu weder vom Einsatzort entfernt werden, noch ist eine Demontage einer der ggfs. vorgesehenen Begrenzungen erforderlich.

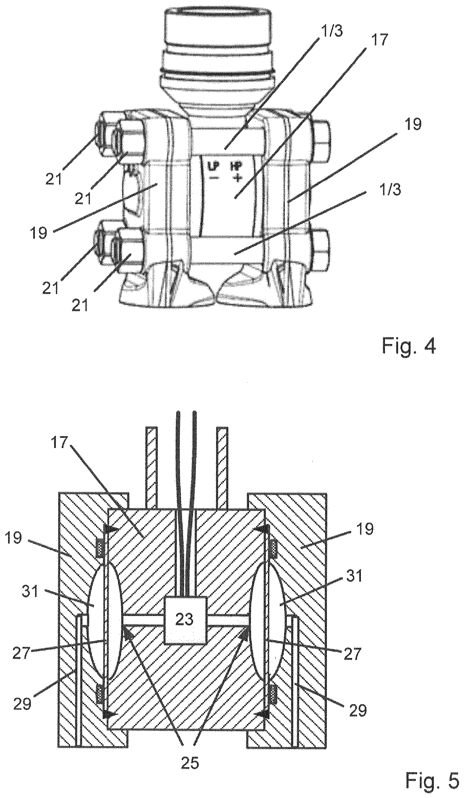

Fig. 4 zeigt eine Ansicht und Fig. 5 eine Schnittzeichnung eines ersten Ausführungsbeispiels eines mit mindestens einem Korrosionsschutz-Element 1, 3 ausgestatteten Feldgeräts. Bei dem hier als Beispiel dargestellten Feldgerät handelt es sich um einen Differenzdruck-Messaufnehmer. Der Messaufnehmer umfasst ein Messwerk 17, das zwischen zwei auf einander gegenüberliegenden Außenseiten eines Messwerkskörpers des Messwerks 17 angeordneten Flanschen 19 eingespannt ist. Hierzu sind die Flansche 19 durch Schrauben 21 miteinander verbunden, die jeweils einen zwischen den Flanschen 19 frei liegenden, mit der Umgebung des Messaufnehmers in Kontakt stehenden Bereich aufweisen. Zusätzlich umfasst der Messaufnehmer einen Differenzdrucksensor 23, der über zwei dem Sensor vorgeschaltete Druckmittler 25 mit jeweils einem der beiden Drücke, deren Differenz gemessen werden soll, beaufschlagbar ist. Die Druckmittler 25 sind nach außen jeweils durch eine auf eine Außenseite des Messwerkkörpers aufgeschweißte Trennmembran 27 abgeschlossen und mit einer Druck übertragenden Flüssigkeit befüllt. Die Druckbeaufschlagung der Trennmembranen 27 erfolgt jeweils über einen an eine Wirkdruckleitung anschließbaren Druckübertragungskanal 29, der durch den jeweiligen Flansch 19 hindurch bis zu einer unter dem jeweiligen Flansch 19 eingeschlossenen, an die jeweilige Trennmembran 27 angrenzenden Druckkammer 31 führt.

Bei diesem Feldgerät bestehen die Schrauben 21, sowie vorzugsweise auch die Flansche 19, der Messwerkskörper des Messwerks 17 und die Trennmembranen 27 aus Edelstahl, vorzugsweise aus austenitischem Edelstahl.

Bei diesem Ausführungsbeispiel bildet vorzugsweise mindestens eine der Schrauben 21 eine Komponente des Feldgeräts, an der ein erfindungsgemäßes Korrosionsschutz-Element 1, 3 angebracht ist.

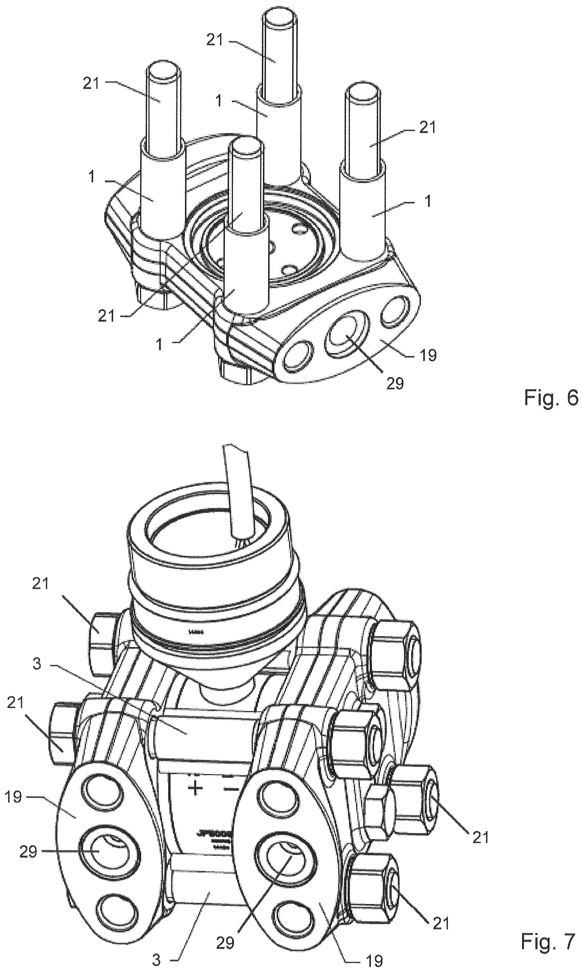

Fig. 6 zeigt hierzu einen der im Wesentlichen scheibenförmigen Flansche 19 eines Differenzdruck-Messaufnehmers, durch dessen vier in dessen Ecken vorgesehenen Durchtrittsöffnungen jeweils eine der Schrauben 21 hindurch gesteckt ist. Jede dieser Schrauben 21 weist einen im Feldgerät zwischen den beiden Flanschen 19 frei liegenden Bereich auf, auf den jeweils eines der in Fig. 3 dargestellten eine Hülse umfassenden Korrosionsschutz-Elemente 1 auf die in Fig. 6 gezeigte Weise aufgeschoben werden kann. Aus der mit den aufgeschobenen Korrosionsschutz-Elementen 1 ausgestatteten Baugruppe wird der Differenzdruck-Messaufnehmer gefertigt, in dem das Messwerk 17 und der zweite Flansch 19 auf dem in Fig. 6 dargestellten Flansch 19 angeordnet und die beiden Flansche 19 mittels der Schrauben 21 miteinander verbunden werden. Nachfolgend bildet jeder der beiden Flansche 19 jeweils eine der im Feldgerät vorgesehenen Begrenzungen, die die axiale Bewegung der Hülse in parallel zur Längsachse der jeweiligen Komponente, nämlich der Schraube 21, verlaufender Richtung begrenzen.

Fig. 7 zeigt eine Ansicht eines weiteren Differenzdruck-Messaufnehmers, bei dem auf die zwischen den beiden Flanschen 19 frei liegenden von außen zugänglichen Bereiche der Schrauben 21 jeweils eines der in Fig. 2 und 3 dargestellten als Federklemme ausgebildeten Korrosionsschutz-Elemente 3 angebracht ist.

Die Nutzung mindestens einer der Schrauben 21 als mit einem der erfindungsgemäßen Korrossionsschutz-Elemente 1, 3 ausgestattete Komponente bietet den Vorteil, dass über jedes dieser Korrosionsschutz-Elemente 1,3 jeweils nicht nur die jeweilige Schraube 21, sondern zugleich auch alle weiteren elektrisch leitend mit der jeweiligen Schraube 21 und/oder dem darauf angebrachten Korrosionsschutz-Element 1 bzw. 3 verbundenen Bauteile aus Edelstahl, nämlich die Flansche 19, der Messwerkskörper und die Trennmembranen 27 vor Korrosion geschützt sind. Darüber hinaus sind zugleich auch die die Trennmembranen 27 mit dem Messwerkskörper verbindenden Schweißnähte vor Korrosion geschützt.

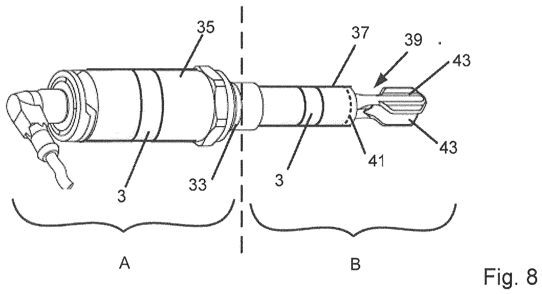

Fig. 8 zeigt eine Ansicht eines weiteren Ausführungsbeispiels eines mit mindestens einem erfindungsgemäßen Korrosionschutz-Element 1, 3 ausgestatteten Feldgeräts. Dieses Feldgerät umfasst einen Prozessanschluss 33, mittels dessen es derart in eine hier nicht dargestellte Öffnung eines Behälter einsetzbar ist, dass ein erster Teil A des Feldgeräts außerhalb und einer zweiter Teil B des Feldgeräts innerhalb des Behälters angeordnet ist. Eine solche Einbauweise ist z.B. bei Messgeräten, Messaufnehmern oder Grenzschaltern zur messtechnischen Erfassung, zur Messung und/oder zur Überwachung einer Messgröße eines im Behälter enthaltenen Füllguts, wie z.B. eines Füllstands, einer Dichte oder einer Leitfähigkeit des Füllguts, üblich. Bei diesen Feldgeräten umfasst der erste Teil A üblicher Weise ein erstes Gehäuse 35 in dem z.B. eine Elektronik untergebracht ist. Der zweite Teil B umfasst z.B. ein im Betrieb der zu erfassenden, zu messenden und/oder zu überwachenden Messgröße auszusetzendes Element, wie z.B. einen Sensor oder eine Sonde, oder eine Sende- und/oder Empfangseinheit, wie z.B. eine Antenne, mit der Signale in Richtung des Füllguts gesendet und/oder nach deren Wechselwirkung mit dem Füllgut empfangen werden. Der zweite Teil B ist im Einsatz z.B. dann einer korrosiven Umgebung ausgesetzt, wenn er in Kontakt mit einem korrosiven Füllgut oder einer über dem Füllgut befindlichen korrosiven Dampfphase gelangt.

Fig. 8 zeigt als Beispiel einen Füllstands-Grenzschalter zur Feststellung und/oder Überwachung eines Über- oder Unterschreitens eines durch die Einbauhöhe des Grenzschalters am Behälter vorgegebenen Füllstands. Füllstands-Grenzschalter dieser Art werden von der Anmelderin unter der Produktbezeichnung Liquiphant vertrieben. Der innerhalb des Behälters anzuordnende Teil B dieses Grenzschalters umfasst ein zweites Gehäuse 37, an dessen Ende ein zu Schwingungen anregbares mechanisches Gebilde 39 angeordnet ist. Das zweite Gehäuse 37 und das Gebilde 39 können z.B. über eine ringförmig umlaufende Schweißnaht 41 miteinander verbunden sein. Das Gebilde 39 umfasst in dem dargestellten Ausführungsbeispiel zwei über eine das zweite Gehäuse 37 endseitig abschließende Membran gekoppelte Schwingstäbe 43, die mittels eines im zweiten Gehäuse 37 angeordneten elektromechanischen Wandlers zu gegenphasigen, senkrecht zu deren Längsachse gerichteten Schwingungen anregbar sind. Der Wandler ist an eine z.B. im ersten und/oder im zweiten Gehäuse 35, 37 angeordnete Elektronik angeschlossen, die anhand mindestens einer Eigenschaft der vom Wandler erfassten resultierenden Schwingung des Gebildes 39, wie z.B. deren Frequenz und/oder Amplitude, ein Über- oder Unterschreiten des durch die Einbauhöhe des Grenzschalters vorgegebenen Füllstands feststellt und/oder überwacht.

Bei diesem Feldgerät bestehen das erste Gehäuse 35, das zweite Gehäuse 37, der Prozessanschluss 33 und/oder das Gebilde 39 aus Edelstahl, vorzugsweise aus austenitischem Edelstahl. Insoweit bildet vorzugsweise mindestens eines der Gehäuse 35, 37 eine Komponente des Feldgeräts, an der ein erfindungsgemäßes Korrosionsschutz-Element 1, 3 angebracht ist.

Fig. 8 zeigt als Beispiel hierzu ein auf einen Gehäuseabschnitt des ersten Gehäuses 35 aufgestecktes oder aufgeklemmtes Korrosionsschutz-Element 3, das im Wesentlichen baugleich zu dem in Fig. 2 und 3 dargestellten Korrosionsschutz-Element 3 ist. Hierdurch sind das erste Gehäuse 35 und der Prozessanschluss 33 vor Korrosion geschützt. Dieser Schutz ist insb. dann von Vorteil, wenn das Gehäuse 35 unter Anwendungsbedingungen in einer wärmeren, korrosiven Umgebung, wie z.B. einem Salznebel, eingesetzt wird, die auf dem kälteren Gehäuse 35 kondensiert, da hier die Korrosionsgefahr für Edelstahl, insb. für austenitischen Edelstahl, besonders hoch ist.

Sofern durch Korrosion der Korrosionsschutz-Elemente 1, 3 entstehende Reaktionsprodukte am Einsatzort im Behälter toleriert werden können, kann alternativ oder zusätzlich hierzu auch das im Betrieb innerhalb des Behälters befindliche zweite Gehäuse 37 mit einem erfindungsgemäßen Korrosionsschutz-Element 3 ausgestattet werden. Fig. 8 zeigt hierzu ein auf einen Gehäuseabschnitt des zweiten Gehäuses 37 aufgestecktes oder aufgeklemmtes Korrosionsschutz-Element 3, das im Wesentlichen baugleich zu dem in Fig. 2 und 3 dargestellten Korrosionsschutz-Element 3 ist. Hierdurch sind das zweite Gehäuse 37, das Gebilde 39 und der Prozessanschluss 33, sowie auch die Schweißnaht 41 vor Korrosion geschützt.

Die beiden Gehäuseabschnitte sind vorzugsweise jeweils als verjüngte Bereiche des jeweiligen Gehäuses 35, 37 ausgebildet, die jeweils eine Querschnittsfläche aufweisen, die geringer ist als die Querschnittsflächen der beiden zu beiden Seiten daran angrenzenden, jeweils eine der zuvor beschriebenen Begrenzungen bildenden Bereiche des jeweiligen Gehäuses 35, 37.
- 1: Korrosionsschutz-Element
- 3: Korrosionsschutz-Element
- 5: Federschenkel
- 7: Fortsatz
- 9: Körper
- 11: Körper
- 13: Beschichtung
- 15: Beschichtung
- 17: Messwerk
- 19: Flansch
- 21: Schrauben
- 23: Differenzdrucksensor
- 25: Druckmittler
- 27: Trennmembran
- 29: Druckübertragungskanal
- 31: Druckkammer
- 33: Prozessanschluss
- 35: erstes Gehäuse
- 37: zweites Gehäuse
- 39: Gebilde
- 41: Schweißnaht
- 43: Schwingstab

## Patentansprüche

1. Korrosionsschutz-Element (1, 3) für ein Feldgerät,
- wobei das Feldgerät eine mit einer Umgebung des Feldgeräts in Kontakt stehende Komponente aus Edelstahl, insb. aus austenitischem Edelstahl, umfasst, **dadurch gekennzeichnet, dass**
- das Korrosionsschutz-Element (1, 3) als Eisen oder rostenden Stahl umfassende Opferanode ausgebildet ist und eine Formgebung aufweist, die derart ausgebildet ist, dass das Korrosionsschutz-Element (1, 3) derart an der Komponente des Feldgeräts anbringbar ist, dass die Opferanode in elektrisch leitendem Kontakt zu der Komponente steht und dass das Korrosionsschutz-Element (3) als einteiliges auf die Komponente aufsteckbares oder aufklemmbares, federklemmenförmiges Korrosionsschutz-Element (3) ausgebildet ist, wobei
- das Korrosionsschutz-Element eine Federklemme mit zwei Federschenkel umfasst, wobei an den freien Enden der Federschenkel jeweils ein nach außen weisender Fortsatz angeformt ist, der das manuelle Anbringen und Abziehen des Korrosionsschutz-Element erleichtert.

2. Korrosionsschutz-Element gemäß Anspruch 1, **dadurch gekennzeichnet, dass** das Korrosionsschutz-Element (1, 3) einen Körper (9, 11), insb. einen einteiligen Körper (9, 11), aus Eisen oder einem rostendem Stahl umfasst.

3. Korrosionsschutz-Element gemäß Anspruch 1 bis 2, **dadurch gekennzeichnet, dass** der Körper (9, 11) mit einer Beschichtung (13, 15) aus einem zum kathodischen Korrosionsschutz von Edelstahl geeigneten Beschichtungsmaterial beschichtet ist.

4. Korrosionsschutz-Element gemäß dem vorhergehenden Anspruch, **dadurch gekennzeichnet, dass** das Beschichtungsmaterial Zink umfasst.

5. Korrosionsschutz-Element gemäß Anspruch 3 bis 4, **dadurch gekennzeichnet, dass**
- der Körper (9, 11) eine Materialstärke in der Größenordnung von 0,2 mm bis 3 mm, insb. von 0,3 mm bis 1 mm, aufweist, und/oder
- die Beschichtung (13, 15) eine Schichtdicke in der Größenordnung von 20 µm bis 50 µm aufweist.

6. Mit mindestens einem Korrosionsschutz-Element (1, 3) gemäß Anspruch 1 bis 5 ausgestattetes Feldgerät, **dadurch gekennzeichnet, dass** jedes vorgesehene Korrosionsschutz-Element (1, 3) jeweils auf einer mit einer Umgebung des Feldgeräts in Kontakt stehenden Komponente des Feldgeräts aus Edelstahl, insb. aus austenitischem Edelstahl, angebracht ist.

7. Feldgerät gemäß Anspruch 6, **dadurch gekennzeichnet, dass** die vorgesehenen Korrosionsschutz-Elemente (1, 3) mindestens ein auf eine von außen zugängliche Komponente aufgestecktes oder aufgeklemmtes Korrosionsschutz-Element (3) umfassen, das als einteiliges federklemmenförmiges Korrosionsschutz-Element (3) ausgebildet ist, dessen beiden Federschenkel zumindest einen Bereich dieser Komponente umgreifen.

8. Feldgerät gemäß Anspruch 7, **dadurch gekennzeichnet, dass** zu beiden Seiten des Bereichs mindestens einer der Komponenten jeweils eine Begrenzung vorgesehen ist, die derart ausgebildet ist, dass sie eine axiale Bewegung des auf dem Bereich angebrachten Korrosionsschutz-Elements (1, 3) in parallel zur Längsachse des Bereichs verlaufender Richtung begrenzt.

9. Feldgerät gemäß Anspruch bis 6 bis 8, **dadurch gekennzeichnet, dass** mindestens eine der vorgesehenen Komponenten einen verjüngten Bereich aufweist, auf dem ein als einteiliges, federklemmenförmiges ausgebildetes Korrosionsschutz-Element (3), derart aufgesteckt oder aufgeklemmt ist, dass es den verjüngten Bereich außenseitlich umgreift.

10. Feldgerät gemäß Anspruch 6 bis 9, **dadurch gekennzeichnet, dass** das Feldgerät mindestens ein weiteres durch mindestens eines der vorgesehenen Korrosionsschutz-Elemente (1, 3) vor Korrosion geschütztes Bauteil aus Edelstahl, insb. aus austenitischem Edelstahl, oder einem im Vergleich zu Eisen oder rostendem Stahl edleren Metall umfasst, das in elektrisch leitendem Kontakt zu mindestens einer der mit einem der Korrosionsschutz-Elemente (1, 3) ausgestatteten Komponenten und/oder dem auf der jeweiligen Komponente montierten Korrosionsschutz-Element (1, 3) steht.

11. Feldgerät gemäß Anspruch 6 bis 10, **dadurch gekennzeichnet, dass**
- das Feldgerät einen Differenzdruckmessaufnehmer umfasst,
- der Differenzdruckmessaufnehmer ein zwischen zwei durch Schrauben (21) miteinander verbundenen Flanschen (19) eingespanntes Messwerk (17) umfasst,
- die Schrauben (21) jeweils einen zwischen den Flanschen (19) frei liegenden, mit der Umgebung in Kontakt stehenden Bereich umfassen, und
- auf dem mit der Umgebung in Kontakt stehenden Bereich mindestens einer der Schrauben (21) jeweils eines der vorgesehenen Korrosionsschutz-Elemente (1,3) angebracht ist.

12. Feldgerät gemäß Anspruch 6 bis 10 zur messtechnischen Erfassung, zur Messung und/oder zur Überwachung einer Messgröße eines in einem Behälter befindlichen Füllguts, **dadurch gekennzeichnet, dass**
- das Feldgerät einen innerhalb des Behälters anzuordnen Teil (A) und einen außerhalb des Behälters anzuordnen Teil (B) umfasst,
- mindestens einer der beiden Teile (A, B) eine Komponente, insb. ein Gehäuse (35, 37), umfasst, auf der ein Korrosionsschutz-Element (3) angebracht ist, wobei das Korrosionsschutz-Element (3) insb. ein auf einen verjüngten Gehäuseabschnitt (45, 47) des jeweiligen Gehäuses (35, 37) aufgestecktes oder aufgeklemmtes Korrosionsschutz-Element (3) ist.

## Claims

1. A corrosion protection element (1, 3) for a field device,
- wherein the field device comprises a component made from stainless steel, in particular made from austenitic stainless steel, in contact with an environment of the field device,
**characterized in that**
- the corrosion protection element (1, 3) is configured as a sacrificial anode comprising iron or oxidizing steel and has a mold environment which is configured such that the corrosion protection element (1, 3) can be attached to the component of the field device such that the sacrificial anode is in electrically conductive contact with the component and that the corrosion protection element (3) is configured as a one-part corrosion protection element (3) in the shape of a spring terminal, which can be attached or clamped onto the component, wherein
- the corrosion protection element comprises a spring terminal with two spring spades, wherein an extension pointing outward is molded onto the exposed ends of the spring spades, which makes it easier to manually attach and remove the corrosion protection element.

2. The corrosion protection element as claimed in claim 1, **characterized in that** the corrosion protection element (1, 3) comprises a body (9, 11), in particular a one-piece body (9, 11), made from iron or an oxidizing steel.

3. The corrosion protection element as claimed in claims 1 and 2, **characterized in that** the body (9, 11) is coated with a coating (13, 15) consisting of a coating material suitable for the cathodic corrosion protection of stainless steel.

4. The corrosion protection element as claimed in the preceding claim, **characterized in that** the coating material comprises zinc.

5. The corrosion protection element as claimed in claims 3 and 4, **characterized in that**
- the body (9, 11) has a material thickness in the magnitude of 0.2 mm to 3 mm, in particular of 0.3 mm to 1 mm, and/or
- the coating (13, 15) has a layer thickness in the magnitude of 20 µm to 50 µm.

6. A field device equipped with at least one corrosion protection element (1, 3) as claimed in claims 1 to 5, **characterized in that** each provided corrosion protection element (1, 3) is in each case mounted on a component of the field device made from stainless steel, in particular made from austenitic stainless steel, in contact with an environment of the field device.

7. The field device as claimed in claim 6, **characterized in that** the provided corrosion protection elements (1, 3) comprise at least one corrosion protection element (3) attached or clamped onto a component that is accessible from the outside, which is configured as a one-piece corrosion protection element (3) in the shape of a spring terminal, the two spring spades of which encompass at least one area of this component.

8. The field device as claimed in claim 7, **characterized in that** a limit is provided in each case on both sides of the area of at least one of the components, which is configured such that it limits an axial movement of the corrosion protection element (1, 3) attached to the area in the direction running parallel to the longitudinal axis of the area.

9. The field device as claimed in claims 6 to 8, **characterized in that** at least one of the provided components has a tapered area onto which a one-piece corrosion protection element (3) configured in the shape of a spring terminal is attached or clamped such that it encompasses the outside of the tapered area.

10. The field device as claimed in claims 6 to 9, **characterized in that** the field device comprises at least one additional component made from stainless steel, in particular from austenitic stainless steel, or a metal more precious than iron or oxidizing steel, protected against corrosion by at least one of the provided corrosion protection elements (1, 3), which is in electrically conductive contact with at least one of the components equipped with one of the corrosion protection elements (1, 3) and/or the corrosion protection element (1, 3) mounted on the respective component.

11. The field device as claimed in claims 6 to 10, **characterized in that**
- the field device comprises a differential pressure flowmeter,
- the differential pressure flowmeter comprises a measuring mechanism (17) clamped between two flanges (19) connected to each other by screws (21),
- each screw (21) comprises an area exposed between the flanges (19) in contact with the environment, and
- one of the provided corrosion protection elements (1, 3) is in each case attached to the area of at least one of the screws (21) that is in contact with the environment.

12. The field device as claimed in claims 6 to 10 for recording, measuring and/or monitoring a measured variable of a filling material in a container, **characterized in that**
- the field device comprises a part (A) to be arranged inside the container and a part (B) to be arranged outside the container,
- at least one of the two parts (A, B) comprises a component, in particular a housing (35, 37), to which a corrosion protection element (3) is attached, wherein the corrosion protection element (3) is in particular a corrosion protection element (3) attached or clamped onto a tapered housing section (45, 47) of the respective housing (35, 37).

## Revendications

1. Élément de protection contre la corrosion (1, 3) pour un appareil de terrain,
- l'appareil de terrain comprenant un composant en acier inoxydable, notamment en acier inoxydable austénitique, lequel composant est en contact avec un environnement de l'appareil de terrain,
**caractérisé en ce que**
- l'élément de protection contre la corrosion (1, 3) est réalisé sous la forme d'une anode sacrificielle comprenant du fer ou de l'acier inoxydable et présente une forme qui est réalisée de telle sorte que l'élément de protection contre la corrosion (1, 3) peut être monté sur le composant de l'appareil de terrain de telle sorte que l'anode sacrificielle est en contact électriquement conducteur avec le composant et que l'élément de protection contre la corrosion (3) est réalisé sous la forme d'un élément de protection contre la corrosion (3) en forme de pince à ressort, lequel élément peut être enfiché ou serré sur le composant, l'élément de protection contre la corrosion (3) étant réalisé sous la forme d'une pièce unique,
- l'élément de protection contre la corrosion comprenant une pince à ressort avec deux branches de ressort, un prolongement orienté vers l'extérieur étant formé à chacune des extrémités libres des branches de ressort, ce qui facilite la mise en place et le retrait manuels de l'élément de protection contre la corrosion.

2. Élément de protection contre la corrosion selon la revendication 1, **caractérisé en ce que** l'élément de protection contre la corrosion (1, 3) comprend un corps (9, 11), notamment un corps d'une seule pièce (9, 11), en fer ou en acier inoxydable.

3. Élément de protection contre la corrosion selon les revendications 1 à 2, **caractérisé en ce que** le corps (9, 11) est muni d'un revêtement (13, 15) en un matériau de revêtement approprié pour la protection cathodique contre la corrosion de l'acier inoxydable.

4. Élément de protection contre la corrosion selon la revendication précédente, **caractérisé en ce que** le matériau de revêtement comprend du zinc.

5. Élément de protection contre la corrosion selon les revendications 3 à 4, **caractérisé en ce que**
- le corps (9, 11) présente une épaisseur de matériau de l'ordre de 0,2 mm à 3 mm, notamment de 0,3 mm à 1 mm, et/ou
- le revêtement (13, 15) présente une épaisseur de couche de l'ordre de 20 µm à 50 µm.

6. Appareil de terrain équipé au moins d'un élément de protection contre la corrosion selon les revendications 1 à 5, **caractérisé en ce que** chaque élément de protection contre la corrosion (1, 3) prévu est monté respectivement sur un composant de l'appareil de terrain en acier inoxydable, notamment en acier inoxydable austénitique, lequel élément est en contact avec un environnement de l'appareil de terrain.

7. Appareil de terrain selon la revendication 6, **caractérisé en ce que** les éléments de protection contre la corrosion (1, 3) prévus comprennent au moins un élément de protection contre la corrosion (3) enfiché ou serré sur un composant accessible de l'extérieur, lequel composant est conçu comme un élément de protection contre la corrosion (3) en forme de pince à ressort d'une seule pièce, dont les deux branches de ressort entourent au moins une zone de ce composant.

8. Appareil de terrain selon la revendication 7, **caractérisé en ce qu'**il est prévu des deux côtés de la zone d'au moins l'un des composants respectivement une limitation qui est conçue de telle sorte qu'elle limite un mouvement axial de l'élément de protection contre la corrosion (1, 3) appliqué sur la zone dans une direction s'étendant parallèlement à l'axe longitudinal de la zone.

9. Appareil de terrain selon les revendications 6 à 8, **caractérisé en ce qu'**au moins l'un des composants prévus présente une zone rétrécie sur laquelle est enfiché ou serré un élément de protection contre la corrosion (3) réalisé sous la forme d'une pince à ressort d'une seule pièce, de telle sorte que ledit élément entoure la zone rétrécie sur le côté extérieur.

10. Appareil de terrain selon les revendications 6 à 9, **caractérisé en ce que** l'appareil de terrain comprend au moins un autre composant en acier inoxydable, notamment en acier inoxydable austénitique, ou en un métal plus noble que le fer ou l'acier inoxydable, protégé contre la corrosion par au moins l'un des éléments de protection contre la corrosion (1, 3) prévus, lequel composant est en contact électriquement conducteur avec au moins l'un des composants équipés de l'un des éléments de protection contre la corrosion (1, 3) et/ou avec l'élément de protection contre la corrosion (1, 3) monté sur le composant respectif.

11. Appareil de terrain selon les revendications 6 à 10, **caractérisé en ce que**
- l'appareil de terrain comprend un capteur de pression différentielle,
- le capteur de pression différentielle comprend un mécanisme de mesure (17) serré entre deux brides (19) reliées entre elles par des vis (21),
- les vis (21) comprennent chacune une zone libre entre les brides (19), laquelle zone est en contact avec l'environnement, et
- sur la zone en contact avec l'environnement d'au moins une des vis (21) est monté respectivement un des éléments de protection contre la corrosion (1, 3) prévus.

12. Appareil de terrain selon les revendications 6 à 10, lequel est destiné à la saisie métrologique, la mesure et/ou la surveillance d'une grandeur de mesure d'un produit se trouvant dans un réservoir, **caractérisé en ce que**
- l'appareil de terrain comprend une partie (A) à disposer à l'intérieur du récipient et une partie (B) à disposer à l'extérieur du réservoir,
- au moins l'une des deux parties (A, B) comprend un composant, notamment un boîtier (35, 37), sur lequel est monté un élément de protection contre la corrosion (3), l'élément de protection contre la corrosion (3) étant notamment un élément de protection contre la corrosion (3) enfiché ou serré sur une section de boîtier (45, 47) rétrécie du boîtier (35, 37) respectif.
